# EUROPEAN PATENT APPLICATION

(11) **EP 4 056 250 A1**
(43) Date of publication of application: **14.09.2022**
(21) Application number: 21162016.6
(22) Date of filing: 11.03.2021
(51) Int. Cl.: B01D 27/08, B01D 27/14, B01D 36/00, C02F 1/00

(54) **DEVICE FOR FILTERING WATER WITH A VENTING MEANS FOR VENTING GASES**

(71) Applicant: Brita GmbH, 65232 Taunusstein (DE)
(72) Inventor: SCHULER, Tobias, 63303 Dreieich (DE)

(57) **Abstract**

The invention relates to a device (1) for filtering water. The device (1) comprises a separating element (2) which separates a first container (3) for receiving raw water to be filtered from a second container (4) to collect the filtered water within the device (1). The separating element (2) comprises a first cavity (5) for receiving a first filter cartridge (6) and a second cavity (7) for receiving a second filter cartridge (8). The separating element (2) defines a flow path for the water from the first container (3) through the first filter cartridge (6) and through the second filter cartridge (8) into the second container (4). The device (1) comprises venting means (9) for venting gases that are trapped within the separating element (2). The venting means (9) comprises a venting channel (10). A first opening (11) at a first end of the venting channel (10) is connected to the second cavity (7). A second opening (12) of the venting channel (10) at a second end that is opposite to the first end discharges into the ambient air (13) so that the second cavity (7) is vented through the venting channel (10) against ambient air (13) pressure.

## Description

### Technical field

The invention relates to a device for filtering water comprising a separating element which separates a first container for receiving raw water to be filtered from a second container to collect the filtered water within the device, whereby the separating element comprises a first cavity for receiving a first filter cartridge and a second cavity for receiving a second filter cartridge, whereby the separating element defines a flow path for the water from the first container through the first filter cartridge and through the second filter cartridge into the second container, and whereby the device comprises venting means for venting gases that are trapped within the separating element.

### Background of the invention

Liquid filter systems for drinkable liquids like water have reached a widespread usage and allow for good quality drinkable liquids reducing the importance of the quality of the source liquid that is used as basis for the drinkable liquid. But in many regions of the world, it is not only necessary to improve the quality of drinking water, but also to treat water that is contaminated with bacteria in order to provide drinkable water. In particular, household water filter systems have been developed and are widely used for improving the quality of the tap water that is distributed to the respective household. Usually, liquid filter systems and in particular water filter systems comprise a first container that can be filled with a liquid or with water to be filtered, and a second container that is fluidly connected via a filter cartridge with the first container, whereby the liquid that flows from the first container into the second container must pass through the filter cartridge and will be filtered during the passage through the filter cartridge.

Also, two-stage filter systems are known that are suitable for water filtering treatments. In a first filter stage, a first filter cartridge comprising e.g. active carbons can be used in order to reduce the concentration of contaminants like chlorine or suspended solids. The second filter stage of the liquid filter system comprises e.g. ion-exchange resins to reduce the concentration of calcium and magnesium ions which will result in reducing the water hardness. Each filter stage can be contained within a separate filter cartridge housing or combined within a single filter cartridge that comprises such two stages. Furthermore, hollow membrane filter cartridges are known that comprise hollow fibers which provide for a predominantly mechanical filtering process which allows for retaining bacteria. Some filter systems combine two or more of these filter materials and different filtering methods. The water that is filtered by such a filter system usually has a better taste and also has an improved quality for human consumption.

Many household filter systems rely on gravitational forces and comprise an arrangement of the first container positioned above the second container, resulting in a gravitationally driven liquid flow from the first container into the second container without the need for applying additional pressure to create the liquid flow. However, there are also filter systems that comprise a pump system or another pressure generating system that generates a pressure driven flow of water from the first container into the second container.

A filter cartridge usually has a filter medium arranged inside the filter cartridge. A housing of the filter cartridge contains and confines the filter medium. A water inlet opening is located on one side of a filter medium volume and a water outlet opening on the other side of the filter medium volume. In order to avoid any bypass around the filter cartridge that is inserted into a separation element that separates the first container from the second container, there is usually at least one sealing element on the outside surface of the filter cartridge housing which seals a gap between the filter cartridge and a filter cartridge seating within a corresponding cavity within the separation device in order to prevent water flowing around the filter cartridge at the outer surface of the filter cartridge without being filtered by the filter medium. Thus, the water is forced to enter the filter cartridge through the water inlet opening and to leave the filter cartridge through the water outlet opening. Therefore, the water must flow through the filter cartridge on its way from the first container to the second container. It is not possible for the water to flow around the filter cartridge housing without passing through the filter cartridge or the filter medium. Commercially available sealing elements such as O-rings are suitable and typically used within devices for filtering water.

The filter cartridges are usually mounted removably within the filter system in order to be able to vent the filter cartridges before first use and to be able to replace the filter cartridges when the service life of the filter cartridges expires. Typically, within many two-stage filter systems, the filter cartridges are arranged one above the other inside the separating element that separates the raw water container from the filtered water container. Thus, the first cavity is positioned above the second cavity. The first cavity and the second cavity can be separate regions within an opening or a recess or a clearance within the separation element. The two cavities need not be separated from each other and only be accessible via small channels or such. However, each of the two cavities is designed for and suitable for receiving a filter cartridge in such a manner that a liquid must follow a given flow path from the first container through both filter cartridges into the second container.

The raw water that is filled into the first container then flows through the first cavity and afterwards through the second cavity, whereby the raw water will be filtered due to the two filter cartridges that are positioned within the respective cavity. Due to the arrangement of the first container above the separation element and the two filter cartridges one above the other within the separation element, the water will be driven by gravitational force from the first container through both filter cartridges and into the second container that is positioned below the first container and the separation element that contains the two filter cartridges. Due to such an arrangement of the individual elements one above the other, no pump or separate conveyor is required to filter the water.

However, if a replacement of the lower filter cartridge is required, which is positioned below an upper filter cartridge, both filter cartridges must be removed from the filter unit. Furthermore, it is difficult to provide proper venting means for removing any residual air that might remain within the two filter cartridges after mounting the filter cartridges within the separation element inside the filter device.

After an initial installation of a new filter cartridge into the device, the new filter cartridge will get into contact with water for the first time. In order to enhance the filtering process any residual air that is trapped within the filter cartridge and a cavity that receives and holds the filter cartridge should be removed and replaced by water that flows through the filter cartridge. Thus, for many filter cartridges and in particular for hollow fiber membrane filters there is a need to remove air from the filter cartridge. Removal of residual air is in particular important for the hollow fiber material within hollow fiber membrane filter cartridges, as there is usually a large amount of residual air trapped within the hollow fiber material that tends to remain within the filter cartridge even after a large amount of water passed through the filter cartridge. Otherwise, some part of the water that flows through the filter cartridge will not be fully treated by the filter material, and the efficiency of the filter device will be reduced during subsequent filtering treatments of water flowing through the filter cartridge.

For venting filter cartridges in order to remove residual air, it is known from practice to insert the filter cartridges into the device and to fill the first container with water. After all the water has flown from the first container through the filter cartridge into the second container, the water is removed from the lower container but not used for human consumption, as the filtering efficiency of the filter cartridge only increases gradually during the venting process. This step can be performed repeatedly until the venting of the filter cartridge is completed. However, due to the removal of residual air is performed against the raw water and not directly against the atmosphere, the venting may not be fully completed or may require a long venting process.

There are filter cartridges known which are designed for and used in such a way that the water to be filtered flows through the filter cartridge from the bottom to the top. Thus, any residual air accumulates in an upper area within the filter cartridge when the filter cartridge is filled with water. The air accumulates in an upper region inside the filter cartridges and inside any cavities that encloses the filter cartridges. Unless the filter cartridge comprises proper venting means, the filter efficiency and thus the filter service life is reduced. Furthermore, the flow resistance in the filter element increases, whereby the liquid flow will decrease.

For venting residual air inside granule-based filter cartridges, such as ion exchange filters or filters with activated carbon, it is common practice to immerse such a filter cartridge in water and to move it back and forth underwater. Thus, the air trapped within the granulate should loosen and leaving the filter via air outlet openings which are typically brought into in the housings of the filter cartridges. However, a proper venting of such filter cartridges before inserting the filter cartridge into the device for filtering water is considered cumbersome and time-consuming.

Accordingly, there is a need for providing for a device for filtering raw water which comprises venting means for effectively venting residual air from both filter cartridges.

### Summary of the invention

The present invention relates to such device for filtering water for venting the filter cartridge, whereby the venting means comprises a venting channel, whereby a first opening at a first end of the venting channel is connected to the second cavity and a second opening of the venting channel at a second end that is opposite to the first end discharges into the ambient air so that the second cavity is vented through the venting channel against ambient air pressure. The first cavity and the first filter cartridge inserted into the first cavity can be vented into the first container. There is no need for a separate venting channel that supports the venting of the first filter cartridge. Many filtering devices that only comprise a single filter cartridge are designed to allow the venting of the single filter cartridge into the raw water container, which has been proven to be sufficient and well wording. By venting the second cavity through a venting channel, the venting of the second filter cartridge is facilitated and significantly more efficient when compared to venting the second filter cartridge through the first cavity into the raw water container. Furthermore, by enabling a separate means for venting the second filter cartridge, both filter cartridges can be installed into the filtering device without the need for first installing the second filter cartridge and waiting for a sufficient venting of the second filter cartridge before installing the first filter cartridge. In addition, it is considered very advantageous to vent the second filter cartridge against ambient pressure instead to remove the residual air via the flow of the raw water through from the first container through both cavities into the second container. Thus, venting takes place against a particularly low pressure, namely the ambient pressure, and not against the water pressure of the raw water that flows through the second filter cartridge, which makes venting particularly fast and reliable.

Because the first opening of the venting channel is located directly at the second cavity, the air trapped in it can be discharged particularly effectively via the venting channel. The first opening can be designed to cover a particularly large area of the second cavity. This reduces the risk of residual air remaining within the second cavity.

By venting the air directly through the venting channel into the environment, it does not need to pass through the first filter and through the first cavity. This reduces the risk of the air accumulating and being trapped at another point along a venting path that runs through the separation element and against the flow direction of the raw water from the first container into the second container.

By placing the first opening of the venting channel at the second cavity, the venting channel can be designed particularly short. With short venting channels, the pressure losses generated by the frictional forces inside the venting channels are particularly low. Thus, a particularly effective and fast venting of the trapped air can be achieved. It is not necessary to increase the cross section of the venting channel to reduce pressure losses. Thus, the venting channel can be designed with a small venting channel cross section, which effects that the filter unit can also be made particularly small.

According to an advantageous embodiment of the invention, the venting channel runs outside of the first container and the second opening of the venting channel is located outside of the first container. In this way, any residual air from the second cavity will be vented into the surroundings and not into the first container which can be filled with raw water. In case that a cover for the second opening is considered advantageous e.g. in order to avoid any contamination falling down or entering into the second cavity via the venting channel, such a cover can be mounted on top of the venting channel. It is also possible to provide for a suitable lateral projection of a lid that covers the first container. However, it is also possible that the venting channel runs mainly outside of the first container, but finally runs into the first container. Such an embodiment of the venting channel avoids a separate opening of the venting channel outside of the first container that could potentially contribute to an unwanted contamination of the filtered water.

According to an advantageous design, the venting channel runs at least partially inside the first container. The second opening of the venting channel can be located inside or outside the first container. It is considered advantageous that the second opening of the venting channel is located near the top of the first container. This allows the filter device to be designed in an aesthetic manner and to hide the venting channel from being seen from the outside. As the outside and in particular the outer surface of the first container is not affected by a venting channel, handling and cleaning of the filter device will be facilitated.

Often a filter device comprises a lid which covers the first container in order to protect the inside of the first container and the water within the first container from any unwanted contamination. Typically, such lids do not comprise neither a watertight nor an airtight seal that seals the first container against the environment. In order to protect the second opening of the venting channel from impurities, the venting channel is advantageously designed in such a way that at least a small part of the venting channel runs inside the first container and ends just below the lid. Then a small gap between the first opening of the venting channel and the lid allows for air escaping from the venting channel without any resistance. However, a risk of raw water entering into the second cavity via the venting channel is significantly reduced without need for a separate cover due to the small gap that is arranged just below the lid.

In accordance with an advantageous embodiment of the invention, the venting channel runs along an outer surface of the first container, whereby the second opening of the venting channel is located beyond the top of the first container. Even in case that the first container is fully filled with raw water, the water level will not reach the second opening and in particular the water level will not rise above the second opening of the venting channel, and there is no risk of water flowing from the first container into the venting channel and thus bypassing the first cavity with the first filter cartridge.

To efficiently vent residual air from the second cavity, the first opening of the venting channel can be connected with the second cavity in an upper part of the second cavity. In this way the air that rises towards the upper part of the second cavity and accumulates in the upper part of the second cavity can easily enter the venting channel through the first opening of the venting channel and can be removed from the device via the venting channel. A transition from the first opening to the second cavity is advantageously designed so that any air that is trapped within a large volume of the cavity is directed towards the venting channel. Removal of air from the second cavity can be facilitated by arranging the first opening at a top surface of the second cavity.

According to an advantageous aspect of the invention, a lower part of the second cavity is sealed against an upper part of the second cavity. This can be achieved by arranging an additional sealing element between the second filter cartridge and the separating element that is positioned above a lower sealing element at the bottom of the second filter cartridge. The lower part of the second filter cartridge is then separated from the venting channel, and all residual air that is pushed towards the upper region of the second cavity is directed towards the venting channel and cannot be trapped within the lower part of the second cavity.

According to an advantageous embodiment of the invention, the first container is arranged on top of the second container in order to allow for a flow path for the fluid that is continuously directed downwards, which facilitates and supports the gravity driven fluid flow from the first container into the second container. In such an arrangement, the filter cartridges are advantageously arranged along a vertical axis centered to the first container and the second container so that the water flow forced by gravity passes through the filter cartridges. This also allows for a small footprint of the stacked first and second container. Directions like vertical or horizontal as well as on top of or above and below are labelled with respect to the direction of the gravitational force, whereby the direction of the gravitational force equals the vertical direction.

In yet another embodiment of the invention, the filter cartridges can be arranged horizontally offset next to each other within the separation element. Preferably, a horizontal projection of one of the cavities at least partially overlaps with the other cavity. Then both filter cartridges can be seated side by side and e.g. at the same vertical level next to each other. This allows for reduced space requirements in a vertical direction of the filter device. Furthermore, this also allows for convenient removal and replacement of each filter cartridge along a vertical direction without having to remove or relocate the other filter cartridge.

According to an advantageous implementation of the invention the second filter cartridge is designed for and positioned within the second cavity of the separating element to be filled with water from its bottom to its top. Thus, the water that flows through the second filter cartridge displaces residual air towards an upper end of the second filter cartridge and into an upper region within the second cavity. At the same time, the second cavity will be effectively vented by placing the first opening of the venting channel in an upper region and in particularly above an upper opening of the second filter cartridge that is mounted within the second cavity.

Preferably, the cavities and filter cartridges are designed in such a way that both the first filter cartridge and the second filter cartridge can be removed and replaced in the same direction. Thus, it is not necessary to handle and touch both sides of the separation element for mounting or removing both filter cartridges.

A particularly advantageous embodiment of the invention may provide that the first cavity and the second cavity are designed such that the first filter cartridge and the second filter cartridge can be removed in and inserted from the direction of the first container. This allows for a particularly convenient exchange of the filter cartridges. Furthermore, the removal of the filter cartridges in the direction of the first container prevents any manual contact with the filtered water in the second container and thus any possible contamination resulting from a replacement of the filter cartridges. The first and second cavity can be designed for and suitable for inserting the corresponding filter cartridge without need for removing the separation element from a filter device housing. Thus, there is no need to manually handle the separation element and to remove it from the filter device in order to insert and mount a filter cartridge into the corresponding first or second cavity. The sealings that are required in order to avoid any unwanted bypass of liquid around the filter cartridge can be mounted within the separation element or along an outer surface of the filter cartridge. For many applications it is considered beneficial to provide filter cartridges with attached sealings like e.g. O-ring gaskets that are mounted within a circumferential groove or that are molded to the outer surface of the filter cartridge. Such a filter cartridge can be easily inserted or slided into the corresponding cavity and into the seating that is provided by the separation element.

In yet another embodiment of the invention the second filter cartridge can be removed in the direction of the second container. Depending on the design of the sealing elements between the filter cartridge and the cavity, it may be easier to remove the second filter cartridge towards the second container. Advantageously, it is optionally provided that the first filter cartridge can be removed upwards in the direction of the first container and the second filter cartridge downwards in the direction of the second container. This is helpful if the separating element with the filter cartridges is removed from the housing of the first and second container for cleaning or maintenance.

At the end of the filter service life of a filter cartridge it is usually replaced with a new filter cartridge. In order that only the worn-out filter cartridge has to be removed from the filter unit without having to remove the other filter cartridge as well, an advantageous design of the filter element provides that each filter cartridge can be removed and inserted independently from the other filter cartridge without the need for removing the other filter cartridge. This can be easily achieved by arranging both cavities and the respective filter cartridges side by side, i.e. with a horizontal distance next to each other.

According to yet another aspect of the invention each filter cartridge can be removed from and inserted into the corresponding cavity without removing the separating element from a device housing. Then there is no need for manually touching the separating element during a replacement of one of the filter cartridges, which allows for a very simple and hygienic replacement of the filter cartridges.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic representation of the device for filtering water designed in accordance with the invention for venting the second cavity in a sectional view from the side and
Figure 2 illustrates a schematic representation of another embodiment of a device for filtering water in a sectional view from the side.

### Detailed description of the drawings

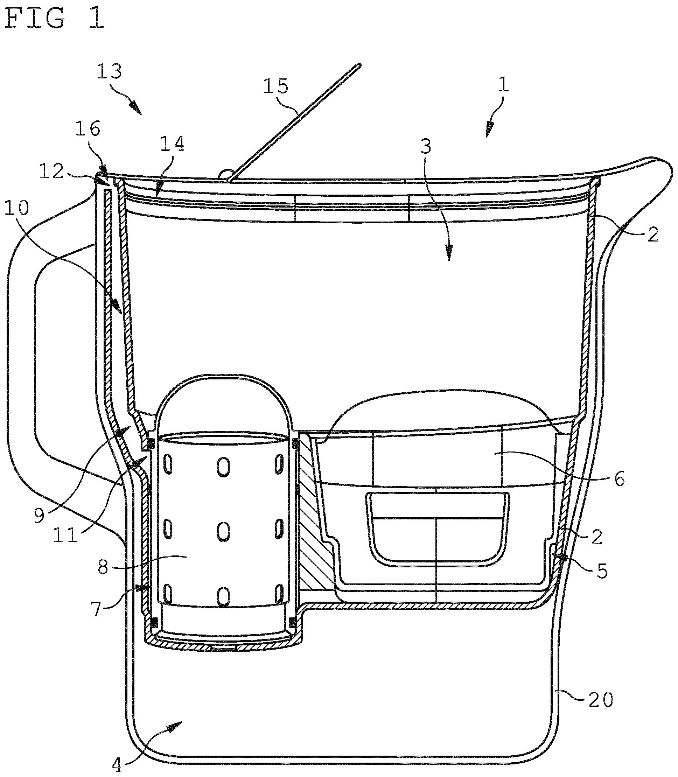

By way of example, the invention is illustrated for a drinking water filtering pitcher. Figure 1 depicts a device 1 for filtering water, comprising a separating element 2 which separates a first container 3 for receiving raw water to be filtered from a second container 4 to collect the filtered water within the device 1. The separating element 2 comprises a first cavity 5 for receiving a first filter cartridge 6 and a second cavity 7 for receiving a second filter cartridge 8. In the example illustrated in Figure 1, the first filter cartridge 6 and the second filter cartridge 8 are inserted in the first cavity 5 and in the second cavity 7. Thus, the separating element 2 defines a flow path for the water from the first container 3 through an inlet of the first filter cartridge 6 and through the first filter cartridge 6 and subsequently through an inlet of the second filter container 8 and through the second filter cartridge 8 into the second container 4. The top of the second filter cartridge 8 is closed, so the water flow path inside the second filter cartridge 7 runs from a bottom to a top of the second filter cartridge and then passes again through the second filter cartridge 8 and exits the second filter cartridge 8 through an outlet at the bottom of the second filter cartridge 8. Thus, any residual air accumulates in an upper area within the second filter cartridge 8 when it is filled with water.

The first filter cartridge 6 and the second filter cartridge 8 are arranged next to each other, whereby they are arranged approximately at the same height. Each filter cartridge 6, 8 can be removed and inserted independently from the other filter cartridge 6, 8. There is no need for removing the other filter cartridge 6, 8. Advantageously, both the first filter cartridge 6 and the second filter cartridge 8 can be removed and replaced in the direction of the first container 3. The removal of the filter cartridges 6, 8 in the direction of the first container 3 prevents any contact with the filtered water in the second container 4, which reduces the risk of contamination of the filtered water and results in a hygienical replacement of the filter cartridges 6, 8.

The device 1 comprises venting means 9 for venting gases that are trapped within the separating element 2. The venting means 9 comprises a venting channel 10, whereby a first opening 11 at a first end of the venting channel 10 is connected to the second cavity 7. A second opening 12 of the venting channel 10 at a second end that is opposite to the first end enables to discharge the second cavity 7 into the ambient air 13. According to the embodiment that is illustrated in figure 1, the venting channel 10 runs outside of the first container 3, whereby the second opening 12 of the venting channel 10 is located outside the first container 3 near the upper edge 14 of the first container 3. The device 1 comprises a lid 15 which has neither a watertight nor an airtight seal against the ambient air 13. The venting channel 10 ends just below the lid 15. A gap 16 between the second opening 12 of the venting channel 10 and the lid 15 lets the air escaping the venting channel 10 into the ambient air without any resistance.

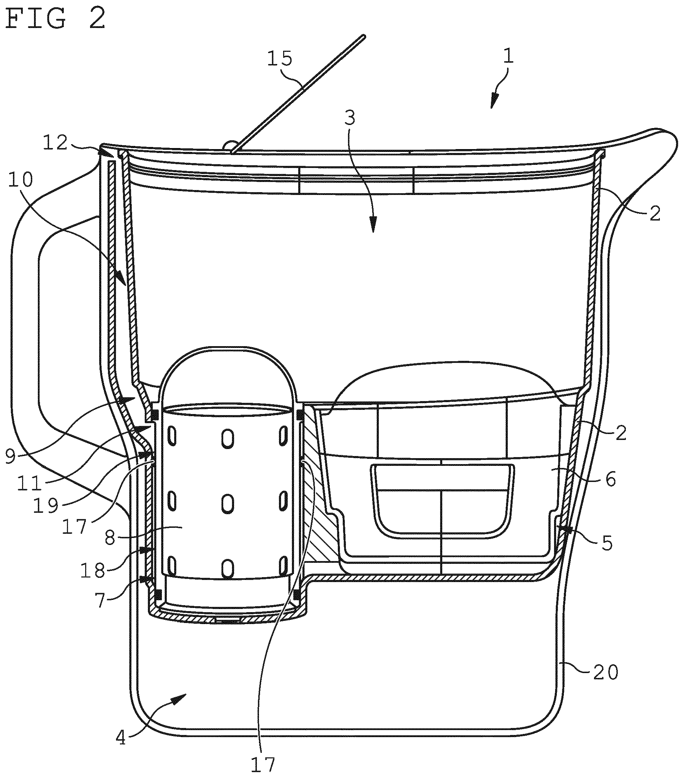

Figure 2 illustrates another embodiment of the device shown in Figure 1. Most of the features of this embodiment are identical or similar to the corresponding features of the embodiment that is illustrated in figure 1 and are therefore not mentioned again. Different to the embodiment of figure 1, the device 1 illustrated in figure 2 comprises an additional sealing element 17. A lower part 18 of the second cavity 7 is sealed against an upper part 19 of the second cavity 7. The additional sealing element 17 is located between the second filter cartridge 8 and the separating element 2. Thus, the additional sealing element 17 forces the flow path of the water to run through the second filter cartridge 8. It is not possible to bypass the second filter cartridge 8 and to accumulate and remain within the venting channel 10 without flowing through the second filter cartridge 8.

In both embodiments according to figures 1 and 2, the separating element 2 is mounted inside of a device housing 20. The separating element 2 separates an upper region within the device housing 20 from a lower region within the device housing 20 and forms the first container 3 and the second container 4 that are above and below the separating element 2. Both cavities 5, 7, are open towards the upper region, i.e. towards the first container 3 that is filled with raw water to be filtered. Both filter cartridges 6, 8 can be inserted into the respective cavity 5, 7 without any need for a previous removal of the separating element 2 from the device housing 20. A replacement of the filter cartridges 6, 8 only requires a manual interaction from within the first container 3 that contains the raw water and not any filtered water. In addition to this, there is even no need to touch the separating element 2 on the surface facing the first container 3, which helps to further reduce any unwanted contamination of the device 1.

## Claims

1. Device (1) for filtering water, comprising a separating element (2) which separates a first container (3) for receiving raw water to be filtered from a second container (4) to collect the filtered water within the device (1), whereby the separating element (2) comprises a first cavity (5) for receiving a first filter cartridge (6) and a second cavity (7) for receiving a second filter cartridge (8), whereby the separating element (2) defines a flow path for the water from the first container (3) through the first filter cartridge (6) and through the second filter cartridge (8) into the second container (4), and whereby the device (1) comprises venting means (9) for venting gases that are trapped within the separating element (2), **characterized in that** the venting means (9) comprises a venting channel (10), whereby a first opening (11) at a first end of the venting channel (10) is connected to the second cavity (7) and a second opening (12) of the venting channel (10) at a second end that is opposite to the first end discharges into the ambient air (13) so that the second cavity (7) is vented through the venting channel (10) against ambient air (13) pressure.

2. Device (1) according to claim 1, **characterized in that** the venting channel (10) runs outside of the first container (3) and the second opening (12) of the venting channel (10) is located outside the first container (3).

3. Device (1) according to claim 2, **characterized in that** the venting channel (10) runs along an outer surface of the first container (3), whereby the second opening (12) of the venting channel (10) is located outside of the first container (3).

4. Device (1) according to one of the preceding claims, **characterized in that** the first opening (11) of the venting channel (10) is connected with the second cavity (7) in an upper part (19) of the second cavity (7).

5. Device (1) according to one of the preceding claims, **characterized in that** a lower part (18) of the second cavity (7) is sealed against an upper part (19) of the second cavity (7).

6. Device (1) according to one of the preceding claims, **characterized in that** the first container (3) is arranged on top of the second container (4) in order to allow for a gravity driven fluid flow from the first container (3) into the second container (4).

7. Device (1) according to one of the preceding claims, **characterized in that** the first filter cartridge (6) and the second filter cartridge (8) are arranged next to each other, whereby they are arranged approximately at the same height, with the filter cartridges (6, 8) overlapping in a vertical direction between the respective cover and the respective bottom of the filter cartridges (6, 8).

8. Device (1) according to one of the preceding claims, **characterized in that** the first cavity (5) and the second cavity (7) are designed that the first filter cartridge (6) and/or the second filter cartridge (8) can be removed in and inserted from the direction of the first container (3).

9. Device (1) according to one of the preceding claims 1 to 7, **characterized in that** the second filter cartridge (8) can be removed in the direction of the second container (4).

10. Device (1) according to one of the preceding claims, **characterized in that** each filter cartridge (6, 8) can be removed and inserted independently from the other filter cartridge (8, 6) without the need for removing the other filter cartridge (8, 6).

11. Device (1) according to one of the preceding claims, **characterized in that** each filter cartridge (6, 8) can be removed from and inserted into the corresponding cavity (5, 7) without removing the separating element (2) from a device housing (20).
